# EUROPÄISCHE PATENTSCHRIFT

(11) **EP 1 016 339 B1**
(45) Veröffentlichungstag und Bekanntmachung des Hinweises auf die Patenterteilung: **05.07.2006**
(21) Anmeldenummer: 99123390.9
(22) Anmeldetag: 24.11.1999
(51) Int. Cl.: A01B 1/06

(54) **Handgeführte Bodenfräse**
Hand guided soil cultivator
Cultivateur pour le sol, guidé à main

(30) Priorität: 28.12.1998 DE 19860394
(43) Veröffentlichungstag der Anmeldung: 05.07.2000
(73) Patentinhaber: Viking GmbH, 6336 Langkampfen (AT)
(72) Erfinder: Zerrer, Gerhard, 71404 Korb (DE)
(74) Vertreter: Wasmuth, Rolf

(56) Entgegenhaltungen:
- DE-U- 8 526 702
- DE-U- 29 607 133
- FR-A- 2 613 578
- GB-A- 2 105 815
- US-A- 5 540 287

## Beschreibung

Die Erfindung betrifft ein handgeführtes Bodenbearbeitungsgerät, insbesondere eine Bodenfräse, der im Oberbegriff des Anspruchs 1 angegebenen Gattung (siehe a.B. US-A-5540287).

Aus der US 2,755,718 ist eine handgeführte Bodenfräse bekannt, bei der ein in einem Gehäuse angeordneter Antriebsmotor über ein Untersetzungsgetriebe eine vertikale Abtriebswelle mit einem Bodenbearbeitungswerkzeug antreibt. Die Fräse wird mittels zweier Holme, welche mit dem Gehäuse verbunden sind, gehalten und geführt. Beim Eingreifen der rotierenden Bodenbearbeitungswerkzeuge in den Boden wird zwar eine Auflockerung des Bodens erreicht, jedoch werden größere Bodenteilchen weggeschleudert, weshalb eine gleichmäßige Krümelung des Bodens nicht erzielt werden kann. Beim Arbeiten zwischen engstehenden Pflanzen besteht zudem die nicht unerhebliche Gefahr, daß diese in den Flugkreis der Bodenbearbeitungswerkzeuge geraten und verletzt oder zerstört werden.

Der Erfindung liegt die Aufgabe zugrunde, ein handgeführtes Bodenbearbeitungsgerät der gattungsgemäßen Art derart weiterzubilden, daß auch bei engstehender Bepflanzung eine Auflockerung des Bodens bis nahe an die Kulturpflanzen bei guter Bodenkrümelung möglich ist.

Die Aufgabe wird durch ein Bodenbearbeitungsgerät mit den Merkmalen des Anspruchs 1 gelöst.

Bei dem erfindungsgemäßen, tragbaren Bodenbearbeitungsgerät sind die um eine vertikale Achse rotierenden Bodenbearbeitungswerkzeuge von der in Umfangsrichtung geschlossenen, weitgehend formstabilen Wand umgeben, weshalb fortgeschleuderte Bodenkrümel auf die Wand auftreffen, zerplatzen und gegebenenfalls erneut in den Flugkreis der Bodenbearbeitungswerkzeuge zurückfallen, wo sie weiter zerkleinert werden. Dadurch ergibt sich eine homogene, gut aufgelockerte Bodenstruktur. Die Wand wirkt ferner als Schutzvorrichtung gegen Berührung durch die Bodenbearbeitungswerkzeuge, so daß auch bis in den Randbereich stehender Kulturpflanzen gearbeitet werden kann, ohne daß eine Verletzung oder Zerstörung der Kulturpflanzen durch die Bodenbearbeitungswerkzeuge zu befürchten ist.

Die Wand ist zweckmäßig höhenverschiebbar gelagert, derart, daß sie bei Aufsetzen des Gerätes auf den Boden in Achsrichtung der Abtriebswelle zurückweicht und den Eingriff der Bodenbearbeitungswerkzeuge in den aufzulockernden Boden zuläßt. Beim Abheben vom Boden fällt die Wand zum Beispiel durch Gewichtskraft in ihre Ausgangsstellung zurück, in der sie die rotierenden Bearbeitungswerkzeuge zumindest seitlich vollständig abdeckt oder zweckmäßig über deren Ende in Achsrichtung der Abtriebswelle vorsteht.

Gemäß der Erfindung ist die Wand Teil einer etwa zylindrischen Schutzglocke, deren Boden von der Abtriebswelle durchragt ist. Die Wand steift die zweckmäßig aus elastischem Material bestehende Schutzglocke aus, so daß beim Aufsetzen des Gerätes auf den Boden die Schutzglocke in Richtung der Drehachse der Abtriebswelle elastisch zurückgedrängt wird, so daß die Bodenbearbeitungswerkzeuge in Eingriff mit dem Boden gelangen können. Dabei kann das tragbare Bodenbearbeitungsgerät durch singuläres Aufsetzen auf den Boden angewendet oder streifenförmig durch den zu bearbeitenden Boden geführt werden.

Beim Abheben vom Boden unterstützen die elastischen Rückstellkräfte der Schutzglocke die Rückstellung der Schutzvorrichtung über die Bodenbearbeitungswerkzeuge, wodurch auch der Anwender vor Verletzung geschützt ist.

Bevorzugt bildet das Gehäuse des Antriebsmotors einen Anschlag für die Schutzglocke, wobei durch den Anschlag der Verschiebeweg der höhenverstellbaren Wand derart begrenzt ist, daß die Abtriebswelle in jeder Arbeitslage des Gerätes mit einem fest vorgebbaren Abstand zum Boden liegt.

Weitere Merkmale der Erfindung ergeben sich aus den weiteren Ansprüchen, der Beschreibung und der Zeichnung, in der ein nachfolgend im einzelnen beschriebenes Ausführungsbeispiel der Erfindung dargestellt ist. Es zeigen:

Ausführungsbeispiele der Erfindung sind nachstehend anhand der Zeichnung näher erläutert. In der Zeichnung zeigt:
- Fig. 1: eine perspektivische Darstellung eines tragbaren, handgeführten Bodenbearbeitungsgerätes nach der Erfindung,
- Fig. 2: einen Teilschnitt durch den Arbeitskopf des Bodenbearbeitungsgerätes nach Fig. 1,
- Fig. 3: einen Teilschnitt nach Fig. 2 mit in den Boden eingreifenden Bearbeitungswerkzeugen,
- Fig. 4: eine perspektivische Darstellung eines als einteiliger Zinkenstern ausgebildeten Bodenbearbeitungswerkzeuges.

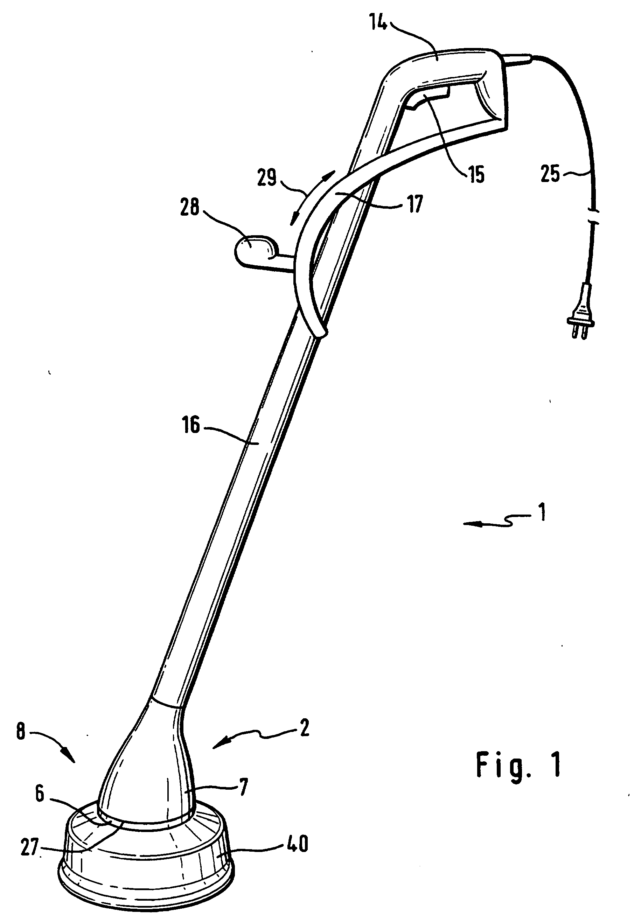

In Fig. 1 ist ein tragbares, handgeführtes Bodenbearbeitungsgerät 1 gezeigt, welches einen im wesentlichen geradlinigen Führungsholm 16 mit einem als Handgriff 14 abgewinkelten oberen Ende aufweist. Das andere, untere Ende des Führungsholms 16 trägt einen Arbeitskopf 2, der im Ausführungsbeispiel einen Elektromotor umfaßt, dessen elektrische Anschlußleitung 25 durch den Führungsholm 16 geführt ist und am Handgriff 14 austritt. Im Handgriff 14 ist ein elektrischer Schalter integriert, der durch ein mechanisches Betätigungselement 15 schaltbar ist, wodurch der Antrieb ein- und auszuschalten ist.

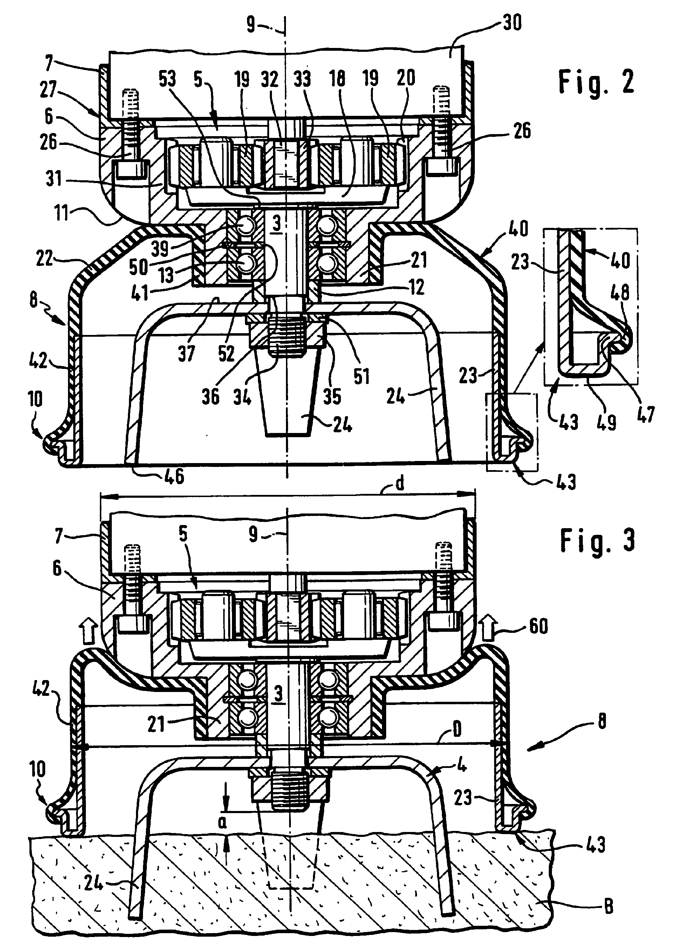

Zum Tragen, Halten und Führen des Bodenbearbeitungsgerätes 1 ist ein zweiter Handgriff 28 vorgesehen, der in Pfeilrichtung 29 längs einer am Führungsholm 16 befestigten, bogenförmigen Führungsschiene 17 verstellbar ist. Die Führungsschiene 17 erstreckt sich vom hinteren Ende des Handgriffs 14 etwa seitlich neben dem Führungsholm 16 und ist nach etwa ein Drittel von dessen Länge an diesem befestigt. Der elektrische Antriebsmotor 30 ist in einem geschlossenen Gehäuse 7 (Fig. 2, 3) vorgesehen, welches sich zum Führungsholm 16 verjüngt und in diesen übergeht (Fig. 1). Das dem Führungsholm 16 abgewandte Ende 27 des Gehäuses 7 ist von einem Getriebegehäuse 6 verschlossen, welches mittels Schrauben 26 am Gehäuse 7, vorteilhaft am Motorblock des elektrischen Antriebsmotors 30 festgelegt ist (Fig. 2).

Das Getriebegehäuse 6 hat eine Innenverzahnung 20 und bildet den Hohlradkranz 31 eines Umlaufräder- bzw. Planetengetriebes 5. Die Welle 32 des Antriebsmotors 30 ragt zentral in den Hohlradkranz 31 und trägt ein antreibendes Sonnenrad 33. Die mit dem Sonnenrad 33 und der feststehenden Innenverzahnung 31 kämmenden Planetenräder 19 sind drehbar auf einem Träger 18 gehalten, der drehfest mit der Abtriebswelle 3 verbunden, vorteilhaft einteilig mit ihr ausgebildet ist. Die Motorwelle 32 und die Abtriebswelle 3 liegen gleichachsig zueinander.

Die Leerlaufdrehzahl des elektrischen Antriebsmotors beträgt etwa 20.000 Umdrehungen pro Minute; belastet geht die Drehzahl bis auf 12.000 Umdrehungen pro Minute zurück. Das vorgesehene Umlaufrädergetriebe 5 hat ein Untersetzungsverhältnis von 1:5 bis 1:6, so daß die Drehzahl auf etwa 2.000 Umdrehungen pro Minute untersetzt wird. Dabei ergeben sich an den Bearbeitungswerkzeugen Umfangsgeschwindigkeiten von 6 bis 8 m/sec.

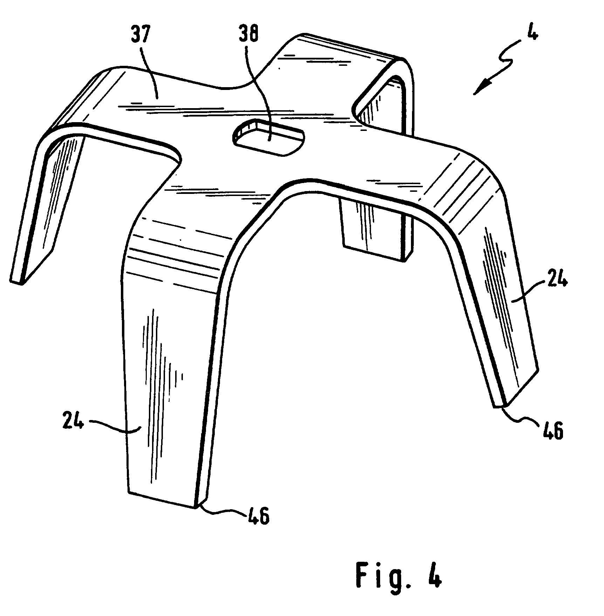

Das freie Ende der Abtriebswelle 3 ragt aus einem zylindrischen Gehäuseflansch 21 des Getriebegehäuses 6 heraus und ist mit einem Gewinde versehen. Zwischen dem Gewindeabschnitt 34 und der Welle 3 ist eine Schulter 36 ausgebildet. Bevorzugt ist der in die Aufnahmeöffnung 38 (Fig. 4) des Zinkensterns 4 eingreifende Wellenabschnitt der Antriebswelle 3 mit von der Kreisform abweichendem Querschnitt ausgebildet, um ein drehfestes Eingreifen des Wellenabschnittes in die entsprechend gestaltete Aufnahmeöffnung 38 des Zinkensterns 4 zu gewährleisten.

Die Abtriebswelle 3 ist im zylindrischen Gehäuseflansch 21 durch Wälzlager 13 und 39 abgestützt; im gezeigten Ausführungsbeispiel sind in Achsrichtung der Abtriebswelle 3 zwei hintereinanderliegende Wälzlager 13, 39 angeordnet. Im zylindrischen Flansch 21 ist ein Sicherungsring 50 zur Axialsicherung eines Wälzlagers 39 und des Planeten-radträgers 18 montiert. Der Innenring des gesicherten Wälzlagers 39 stützt sich dabei an einer Ringschulter 53 ab. Das dem Zinkenstern 4 zugewandte äußere Wälzlager 13 ist an seinem Innenring von einer Distanzhülse 12 abgestützt, welche mit ihrem anderen Ende auf der Rücken-fläche 37 des Zinkensterns 4 aufsitzt. über eine Unterleg-scheibe 51 ist der Zinkenstern 4 mittels einer auf dem Gewindeabschnitt 34 aufgeschraubten Mutter 35 axial gesichert, wobei die von der Mutter 35 aufgebrachten Axialkräfte über den Zinkenstern 4, die Distanzhülse 12, den Innenring des äußeren Wälzlagers 13, eine Distanz-scheibe 52 und den Innenring des inneren Wälzlagers 39 an der Ringschulter 53 des Trägers 18 abgestützt sind. Diese Anordnung bildet einen gemeinsam mit der Antriebswelle 3 drehenden Block. Die Rückenfläche 37 des Zinkensterns 4 liegt mit axialem Abstand zu der dem Gewindeabschnitt 34 benachbarten Schulter 36 des in den Zinkenstern 4 eingreifenden Wellenabschnittes.

Der zylindrische Gehäuseflansch 21 dient zur form- und/oder kraftschlüssigen Halterung einer Schutzglocke 40, die mit einem zylinderförmigen Halteflansch 41 versehen ist, der etwa die axiale Länge des zylindrischen Gehäuseflansches 21 aufweist. Die Schutzglocke 40 und deren nach innen einragender Halteflansch 41 bestehen zweckmäßig aus elastischem Material wie Gummi oder dgl. und sind einteilig gefertigt, so daß der Halteflansch 41 unter Ausnutzung der Elastizität vorteilhaft kraftschlüssig auf dem Gehäuseflansch 21 gehalten und damit die Schutzglocke 40 am Getriebegehäuse 6 fixiert ist.

Der Halteflansch 41 ist mit der im übrigen zylindrischen Schutzglocke 40 über einen sich konisch erweiternden Verbindungsabschnitt 22 verbunden, wobei der zylindrische Abschnitt 42 mit einer im wesentlichen formstabilen Wand 23 ausgesteift ist. Die formstabile Wand 23 besteht zweckmäßig aus einem verschleißfesten Material und ist auf der Innenseite des zylindrischen Schutzglockenabschnittes 42 angeordnet.

Die Wand 23 ist vorteilhaft an ihrem dem Boden B zugewandten Randbereich 43 im Querschnitt etwa U-förmig ausgebildet. Wie die Einzelheit in Fig. 2 darstellt, endet der Randbereich 43 in einem radial äußeren, umlaufenden Ringflansch 47 und greift in eine in der Schutzglocke 40 ausgebildete innere Umfangsnut 48 ein. Die Umfangsnut 48 liegt der Wand 23 zugewandt. Auf diese Weise ist eine formschlüssige Verbindung des Randes 10 der Schutzglocke 40 mit der Wand 23 gegeben. Die Wand 23 läßt sich aufgrund dieser Flanschverbindung einfach aus der Schutzglocke 40 ausknöpfen und bei Bedarf austauschen. Die Wand 23 weist im Randbereich 43 eine dem Boden B zugewandte, ringförmige Verschleißfläche 49 auf, deren Stirnfläche in einer gedachten Ebene liegt, zu der die Längsachse 9 der Antriebswelle 3 senkrecht steht.

Beim Absenken des Gerätes auf den Boden B kommt die Verschleißfläche 49 auf dem Boden B zur Anlage, wodurch sich die Schutzglocke 40 im Bereich des kegelförmigen Abschnittes 22 verformt; die gesamte Schutzglocke verschiebt sich in Pfeilrichtung 60 parallel zur Längsachse 9 in Achsrichtung der Abtriebswelle 3 und die Arbeitsabschnitte 24 des Zinkensterns 4 tauchen in den Boden B ein. Der Boden wird durch den rotierenden Zinkenstern 4 bzw. dessen Arbeitsabschnitte 24 aufgelockert, wobei die aufgrund der Zentrifugalkraft fortgeschleuderten Bodenteilchen auf die formstabile Wand 23 aufprallen, zumindest teilweise zerplatzen und in den Flugkreis der rotierenden Bearbeitungswerkzeuge zurückgeworfen werden, wo sie eine erneute Zerkleinerung erfahren. Auf diese Weise ist eine gute Bodenkrümelung erzielbar, wobei die Eingrifftiefe der Bearbeitungswerkzeuge in den Boden B aufgrund der elastischen Anlage der Schutzglocke 40 an das Getriebegehäuse 6, welches einen Anschlag 11 bildet, konstruktiv vorgebbar ist. Dabei ist gleichzeitig sichergestellt, daß in jeder Arbeitslage des Gerätes 1 das freie Ende der Abtriebswelle 3 mit Abstand a zum Boden B liegt (Fig. 3).

Beim Abheben des Gerätes aus seiner Arbeitslage am Boden B gemäß Fig. 3 wird gleichzeitig mit dem Abheben durch die elastische Rückstellkraft des kegelförmigen Abschnittes 22 der Schutzglocke 40 diese entgegen Pfeilrichtung 60 verschoben, so daß die - gegebenenfalls noch rotierenden Bearbeitungswerkzeuge 4 - abgedeckt bleiben und abgeschleuderte Bodenpartikel innerhalb der Schutzglocke 40 zum Boden B zurückfallen. Ist das Bearbeitungswerkzeug vollständig aus dem Boden B zurückgezogen, wie dies in Fig. 2 dargestellt ist, fällt die Schutzglocke 40 auch unter Wirkung der Gewichtskraft sowie der elastischen Rückstellkraft des Abschnittes 22 in die Ausgangslage zurück, in der die Verschleißfläche 49 auf einer Höhe mit den freien Enden 46 der Bearbeitungswerkzeuge liegt. So bildet die Schutzglocke 40 gleichzeitig eine Sicherheitsvorrichtung 8 gegen Berühren der Bearbeitungswerkzeuge.

Der Durchmesser D der Schutzglocke 40 im Bereich des zylindrischen Abschnittes 42 ist größer als der Durchmesser d des Gehäuses 7, so daß die Schutzglocke das Gehäuse 7 seitlich überragt. Quer zur Längsachse 9 des Arbeitskopfes 2 wird somit aufgrund der konstruktiven Gestaltung zunächst die Schutzglocke 40 seitlich an ein Hindernis anstoßen, so daß ein unmittelbarer Kontakt mit dem Gehäuse 7 vermieden ist. Gegen radiales Einknicken der elastischen Schutzglocke 40 dient die formstabile Wand 23, so daß die Schutzglocke 40 bzw. die Sicherheitsvorrichtung 8 auch als Schutz des Bearbeitungsgerätes 1 selbst dient. Darüber hinaus ist auch gewährleistet, daß durch die Abdeckung der rotierenden Bearbeitungswerkzeuge 4 ein Verletzen oder Zerstören nahestehender Kulturpflanzen vermieden ist.

Der Durchmesser des Zinkensterns 4 ist dabei geringfügig kleiner als der Außendurchmesser d des Gehäuses 7 ausgestaltet, wobei die Rückenfläche 37 des Zinkensterns 4 an der Distanzhülse 12 anliegt. Die etwa parallel zur Längsachse 9 liegenden Arbeitsabschnitte 24 der Zinken überragen den Gewindeabschnitt 34 in Richtung auf den Boden B.

In Fig. 4 ist ein Ausführungsbeispiel der Bodenbearbeitungswerkzeuge in Form eines einteiligen Zinkensterns 4 dargestellt. Die Arbeitsabschnitte 24 der einzelnen Zinken liegen dabei etwa rechtwinklig zur Rückenfläche 37.

## Patentansprüche

1. Handgeführtes Bodenbearbeitungsgerät (1), insbesondere Bodenfräse, mit einem in einem Gehäuse (7) vorgesehenen Antriebsmotor (30) und einer in Arbeitslage des Bodenbearbeitungsgerätes (1) zum Boden (B) etwa vertikalen Abtriebswelle (3) mit einem Bodenbearbeitungswerkzeug (4), wobei das Bodenbearbeitungswerkzeug (4) von einer in Umfangsrichtung geschlossenen, weitgehend formstabilen Wand (23) einer Schutzvorrichtung (8) umgeben ist und wobei das Bearbeitungswerkzeug (4) in Arbeitslage des Bodenbearbeitungsgerätes (1) über den dem Boden (B) zugewandten Rand der Wand (23) um die Bearbeitungstiefe vorsteht,
**dadurch gekennzeichnet daß** die Wand (23) Teil einer im wesentlichen zylindrischen Schutzglocke (40) ist, deren Bodenabschnitt (22) von der Abtriebswelle (3) durchragt ist, daß die Schutzglocke (40) aus flexiblem Material besteht, daß die Wand (23) als die Schutzglocke (40) versteifendes Bauteil im wesentlichen auf der Innenseite der Schutzglocke (40) angeordnet ist und daß die Wand (23) der Schutzvorrichtung (8) in Achsrichtung der Abtriebswelle (3) gegen die Federkraft des flexiblen Materials der Schutzglocke (40) höhenverschiebbar ist.

2. Bodenbearbeitungsgerät nach Anspruch 1,
**dadurch gekennzeichnet, daß** der dem Boden (B) zugewandte Rand (10) der Wand (23) in Arbeitslage des Gerätes (1) auf dem Boden (B) aufliegt.

3. Bodenbearbeitungsgerät nach Anspruch 1 oder 2,
**dadurch gekennzeichnet, daß** das Gehäuse (7) einen Anschlag (11) für die Schutzglocke bildet.

4. Bodenbearbeitungsgerät nach Anspruch 3,
**dadurch gekennzeichnet, daß** der Anschlag (11) den Verschiebeweg der Wand (23) begrenzt, derart, daß die Abtriebswelle (3) in jeder Arbeitslage des Gerätes (1) mit Abstand (a) zum Boden (B) liegt.

5. Bodenbearbeitungsgerät nach einem der Ansprüche 1 bis 4,
**dadurch gekennzeichnet, daß** das Bearbeitungswerkzeug (4) als Zinkenstern mit in Achsrichtung der Abtriebswelle (3) sich erstreckenden Arbeitsabschnitten (24) ausgebildet ist, wobei die Arbeitsabschnitte (24) das freie Ende der Abtriebswelle (3) überragen.

6. Bodenbearbeitungsgerät nach einem der Ansprüche 1 bis 5,
**dadurch gekennzeichnet, daß** zwischen dem Antriebsmotor (30) und der Abtriebswelle (3) ein Planetengetriebe (5) angeordnet ist, wobei die Abtriebswelle (3) vorzugsweise mit dem Planetenradträger (18) verbunden und das Sonnenrad (33) auf der Motorwelle (32) angeordnet ist.

7. Bodenbearbeitungsgerät nach Anspruch 2,
**dadurch gekennzeichnet, daß** der Rand (10) im Querschnitt etwa U-förmig ausgebildet ist und die dem Boden (B) zugewandte Stirnseite eine Verschleißfläche (49) bildet, wobei der Randbereich (43) vorzugsweise in einem umlaufenden, äußeren Ringflansch (47) endet und der Ringflansch (47) insbesondere in eine innere Umfangsnut (48) der Schutzglocke (40) eingreift.

## Claims

1. Hand guided soil cultivator device (1), in particular a rotivator, with a drive motor (30) disposed in a housing (7) and an output shaft (3) disposed more or less vertically with respect to the ground (B) when the soil cultivator device (1) is in the operating position, and the soil cultivator tool (4) is surrounded by a substantially dimensionally stable wall (23) of a protective device (8) which is closed in the circumferential direction, and the cultivator tool (4) projects beyond the rim of the wall (23) facing the ground (B) by the cultivating depth when the soil cultivator device (1) is in the operating position,
**characterised in that** the wall (23) is part of an essentially cylindrical protective bell (40), through the base portion (22) of which the output shaft (3) extends, the protective bell (40) is made from a flexible material and the wall (23) serving as the component which imparts rigidity to the protective bell (40) is essentially disposed on the internal face of the protective bell (40), and the wall (23) of the protective device (8) is height-adjustable against the resilient force of the flexible material of the protective bell (40) in the axial direction of the output shaft (3).

2. Soil cultivator device as claimed in claim 1,
**characterised in that** the rim (10) of the wall (23) facing the ground (B) when the device (1) is in the operating position lies on the ground (B).

3. Soil cultivator device as claimed in claim 1 or 2,
**characterised in that** the housing (7) constitutes a stop (11) for the protective bell.

4. Soil cultivator device as claimed in claim 3,
**characterised in that** the stop (11) restricts the displacement path of the wall (23) so that the output shaft (3) lies at a distance (a) from the ground (B) in every operating position of the device (1) .

5. Soil cultivator device as claimed in one of claims 1 to 4,
**characterised in that** the cultivator tool (4) is provided in the form of a zinc star with working portions (24) extending in the axial direction of the output shaft (3), and the working portions (24) extend beyond the free end of the output shaft (3).

6. Soil cultivator device as claimed in one of claims 1 to 5,
**characterised in that** a planetary gear (5) is disposed between the drive motor (30) and the output shaft (3), and the output shaft (3) is preferably connected to the planet gear carrier (18) and the sun gear (33) is disposed on the motor shaft (32).

7. Soil cultivator device as claimed in claim 2,
**characterised in that** the rim (10) is of an approximately U-shaped cross-section and the end face directed towards the ground (B) forms a wear surface (49), and the peripheral region (43) preferably terminates in a circumferentially extending outer annular flange (47) and the annular flange (47) engages in particular in an internal peripheral groove (48) of the protective bell (40).

## Revendications

1. Appareil de préparation du sol (1) guidé manuellement, en particulier fraise de labour, comprenant un moteur d'entraînement (30) prévu dans un carter (7) et un arbre de sortie (3) équipé d'un outil de préparation du sol (4), ledit arbre de sortie étant, en position de travail de l'appareil de préparation du sol (1), à peu près vertical par rapport au sol (B), où l'outil de préparation du sol (4) est entouré par une paroi (23) d'un dispositif de protection (8), ladite paroi étant fermée dans la direction circonférentielle et dans une large mesure indéformable, et où l'outil de préparation du sol (4), dans la position de travail de l'appareil de préparation du sol (1), est au-dessus du bord de la paroi (23), tourné vers le sol (B), le dépassement étant à peu près égal à la profondeur de préparation,
**caractérisé**
**en ce que** la paroi (23) fait partie d'une cloche de protection (40), pratiquement cylindrique, dont la partie (22) formant le fond est traversée par l'arbre de sortie (3),
**en ce que** la cloche de protection (40) se compose d'un matériau flexible,
**en ce que** la paroi (23), comme pièce de structure raidissant la cloche de protection (40), est disposée pratiquement sur le côté intérieur de la cloche de protection (40), et
**en ce que** la paroi (23) du dispositif de protection (8) est mobile en hauteur, dans la direction axiale de l'arbre de sortie (3), en s'opposant à la force élastique du matériau flexible de la cloche de protection (40).

2. Appareil de préparation du sol selon la revendication 1, **caractérisé en ce que** le bord (10) de la paroi (23), tourné vers le sol (B), est, en position de travail de l'appareil (1), en appui sur le sol (B).

3. Appareil de préparation du sol selon la revendication 1 ou 2, **caractérisé en ce que** le carter (7) forme une butée (11) pour la cloche de protection.

4. Appareil de préparation du sol selon la revendication 3, **caractérisé en ce que** la butée (11) limite la trajectoire de déplacement de la paroi (23), de manière telle que l'arbre de sortie (3) soit positionné, dans chaque position de travail de l'appareil (1), avec un intervalle (a) par rapport au sol (B).

5. Appareil de préparation du sol selon l'une quelconque des revendications 1 à 4, **caractérisé en ce que** l'outil de préparation du sol (4) est conçu comme des dents disposées en étoile ayant des parties de travail (24) s'étendant dans la direction axiale de l'arbre de sortie (3), où les parties de travail (24) dépassent de l'extrémité libre de l'arbre de sortie (3).

6. Appareil de préparation du sol selon l'une quelconque des revendications 1 à 5, **caractérisé en ce qu'**un engrenage planétaire (5) est disposé entre le moteur d'entraînement (30) et l'arbre de sortie (3), où l'arbre de sortie (3) est raccordé, de préférence, au porte-pignons (18), et la roue solaire (33) est disposée sur l'arbre (32) du moteur.

7. Appareil de préparation du sol selon la revendication 2, **caractérisé en ce que** le bord (10) est configuré en ayant une section à peu près en forme de U, et la face frontale tournée vers le sol (B) forme une surface d'usure (49), où la zone du bord (43) se termine, de préférence, par une bride annulaire extérieure et circulaire (47), et la bride annulaire (47) s'engage, en particulier, dans une gorge circulaire intérieure (48) de la cloche de protection (40).
